# FASCICULE DE BREVET EUROPEEN

(11) **EP 4 351 932 B1**
(45) Date de publication et mention de la délivrance du brevet: **24.09.2025**
(21) Numéro de dépôt: 22725521.3
(22) Date de dépôt: 04.05.2022
(51) Int. Cl.: B60R 19/18

(54) **STRUCTURE DE CAISSE DE VÉHICULE AUTOMOBILE**
AUFBAUSTRUKTUR FÜR EIN KRAFTFAHRZEUG
MOTOR VEHICLE BODY STRUCTURE

(30) Priorité: 09.06.2021 FR 2106055
(43) Date de publication de la demande: 17.04.2024
(73) Titulaire: Stellantis Auto SAS, 78300 Poissy (FR)
(72) Inventeur: PERON, Rodolphe, 95220 HERBLAY (FR); ROYER, Guillaume, 91680 BRUYERES LE CHATEL (FR)
(74) Mandataire: BCIP
(86) Numéro de dépôt international: PCT/FR2022/050859
(87) Numéro de publication internationale: WO 2022/258899

(56) Documents cités:
- JP-A- 2003 252 134
- US-A1- 2005 116 498
- US-A1- 2006 022 472

## Description

L'invention se situe dans le domaine des structures de caisse de véhicule automobile en particulier au niveau des pare-chocs avant et/ou arrière.

Lors de la mise au point d'un véhicule automobile, le constructeur est tenu de respecter un cahier des charges, notamment en matière de sécurité, pour pouvoir mettre le véhicule sur le marché. Ainsi, le véhicule doit passer un test de choc à faible vitesse, c'est-à-dire un test qui regarde l'état de la déformation lors d'un choc à l'avant ou à l'arrière du véhicule lorsque celui-ci roule à une vitesse comprise entre 10 km/h et 16 km/h. Le véhicule doit aussi réussir un test de choc à grande vitesse, c'est-à-dire un test où la déformation doit être contenue dans une certaine mesure lorsque le véhicule est lancé à une vitesse supérieure à 50 km/h sur un obstacle.

Le document WO2020/053799 décrit une poutre de pare-chocs avec un renfort en acier. La poutre de pare-chocs est un corps creux avec notamment une partie supérieure et une partie inférieure. Le renfort en acier est disposé à l'intérieur du corps creux de la poutre et a une forme différente de la poutre de pare-chocs, ce qui permet de les fabriquer séparément. Cela a l'avantage de laisser la possibilité au constructeur de modifier le renfort en acier de sorte à optimiser sa capacité à absorber les chocs.

Le document EP3468843 décrit une poutre de pare-chocs présentant un élément de renforcement qui s'étend sur une partie de la longueur de la poutre de pare-chocs. L'élément de renforcement et la poutre de pare-chocs forment une pièce extrudée monobloc. Ce type de structure permet d'éviter d'attacher l'élément de renforcement sur la poutre.

Le document US2005/116498A1 décrit une poutre de pare-chocs selon le préambule de la revendication 1.

Bien que ces configurations aient leurs avantages et permettent aux différents véhicules de remplir les exigences des normes décrites plus haut, des configurations plus légères sont recherchées afin de pouvoir répondre aux contraintes écologiques. La réduction de masse des véhicules permet en effet de réduire les émissions de dioxyde de carbone desdits véhicules en roulage.

L'invention a pour objectif de répondre à au moins un des inconvénients rencontrés dans l'art antérieur. En particulier, l'invention a pour objectif de fournir une structure de caisse de véhicule automobile qui respecte les normes imposées aux constructeurs notamment au niveau sécuritaire tout en améliorant l'impact écologique du véhicule qui comprendrait ce type de structure.

A cet effet et selon un premier aspect, l'invention a pour objet une structure de caisse de véhicule automobile comprenant au moins une poutre de pare-chocs, la poutre de pare-chocs comprenant une zone centrale et deux zones latérales, la zone centrale montrant une section centrale et les deux zones latérales montrant chacune une section latérale, les deux zones latérales étant en outre chacune montée sur au moins un absorbeur, la structure étant remarquable en ce qu'au moins une pièce de renfort est rapportée au niveau de la zone centrale du côté du ou desdits absorbeurs et en ce que l'épaisseur de chacune des sections latérales est inférieure à l'épaisseur formée par la section centrale de la poutre de pare-chocs et ladite au moins une pièce de renfort.

Comme on l'aura compris à la lecture de la définition qui vient d'en être donnée, l'invention permet de fournir une structure de caisse qui permet à un véhicule tenir le cahier des charges imposé au constructeur en termes de sécurité mais qui permet également une diminution de la masse du véhicule. En effet, la poutre de pare-chocs en comparaison avec les poutres de pare-chocs dites classiques, a été affinée, ce qui permet de réduire la masse de la structure de caisse. L'épaisseur est en effet moindre sur les zones latérales de la poutre par rapport à l'épaisseur au niveau de la zone centrale. Un gain de masse entre 300 et 500 grammes peut ainsi être obtenu. De plus, un renfort a été disposé en zone centrale de sorte à absorber et disperser l'énergie reçue lors d'un choc à faible vitesse ou à grande vitesse.

Cette invention est particulièrement intéressante pour un véhicule à motorisation électrique, car la réduction de la masse de la structure de caisse, et donc de la masse globale du véhicule, permet de préserver au mieux l'usage de la batterie et d'augmenter ainsi l'autonomie du véhicule.

Avantageusement, l'épaisseur de la section centrale de la poutre de pare-chocs est identique à l'épaisseur de chacune de ses sections latérales. En d'autres termes la poutre de pare-chocs montre une épaisseur constante sur toute sa longueur.

Par exemple, l'épaisseur formée par la section centrale de la poutre de pare-chocs et ladite pièce de renfort est jusqu'à deux fois l'épaisseur d'au moins une des sections latérales de la poutre de pare-chocs, de préférence de chacune des sections latérales.

Selon l'invention, la poutre de pare-chocs est un corps creux avec une première paroi et une deuxième paroi, les absorbeurs étant fixés à la deuxième paroi, et au moins une pièce de renfort est un embouti en forme de U montrant un fond et deux ailes latérales, les deux ailes latérales recouvrant la zone centrale de la poutre et montrant un bord tombé affleurant la première paroi.

Par exemple, au moins une pièce de renfort est soudée à la zone centrale avec apport de matière entre ledit bord tombé et ledit corps creux de la poutre.

La poutre de pare-chocs est un corps creux avec une première paroi et une deuxième paroi, les absorbeurs étant fixés à la deuxième paroi et la deuxième paroi comprend au moins un premier trou de centrage et/ou au moins une pièce de renfort est un embouti en forme de U montrant un fond et deux ailes latérales, ledit fond comprenant au moins un deuxième trou de centrage aligné avec ledit au moins un premier trou de centrage.

De manière avantageuse, le fond montré par l'embouti de ladite au moins une pièce de renfort comprend au moins un relief, par exemple une nervure ou un bossage.

De préférence, la deuxième paroi montre au moins un relief s'étendant d'une zone latérale à l'autre, par exemple une nervure ou un bossage.

Par exemple, la poutre de pare-chocs et ladite au moins une pièce de renfort, montrent un profil galbé.

Avantageusement, ladite au moins une pièce de renfort présente une longueur comprise entre 60% et 80% de la longueur totale de la poutre de pare-chocs, par exemple une longueur comprise entre 65% et 75%.

Préférablement, la poutre de pare-chocs et/ou ladite au moins une pièce de renfort est en acier montrant une résistance à la traction comprise entre 600 et 1000 MPa telle que déterminée par la norme ISO 6892-1, par exemple comprise entre 650 et 950 MPa ou entre 700 et 900 MPa.

De préférence, ladite au moins une pièce de renfort est en acier montrant une résistance à la traction supérieure à la résistance à la traction de l'acier de la poutre de pare-chocs.

Selon un mode de réalisation avantageux, complémentaire et/ou alternative au précédent, ladite au moins une pièce de renfort est une pièce unique centrée par rapport à la longueur totale de la poutre de pare-chocs.

Selon un deuxième aspect, l'invention a pour objet un véhicule automobile à motorisation électrique et/ou à motorisation thermique comprenant une structure de caisse, ledit véhicule étant remarquable en ce que la structure de caisse est une structure de caisse telle que définie selon le premier aspect. De préférence, le véhicule automobile est un véhicule automobile à motorisation électrique.

Selon un troisième aspect, l'invention a pour objet un procédé de fabrication d'une structure de caisse d'un véhicule automobile selon le premier aspect, dans lequel la structure de caisse comprend au moins une poutre de pare-chocs avec une zone centrale et deux zones latérales, la zone centrale montrant une section centrale et les deux zones latérales montrant chacune une section latérale, le procédé comprenant une étape de montage d'au moins un absorbeur sur chacune des deux zones latérales, le procédé est remarquable en ce qu'il comprend en outre une étape de fixation d'au moins une pièce de renfort au niveau de la zone centrale du côté du ou desdits absorbeurs de sorte à ce que l'épaisseur de chacune des sections latérales soit inférieure à l'épaisseur formée par la section centrale et ladite au moins une pièce de renfort.

Selon l'invention, la poutre de pare-chocs est un corps creux avec une première paroi et une deuxième paroi, les absorbeurs étant montés sur la deuxième paroi et ladite au moins une pièce de renfort est un embouti en forme de U montrant un fond et deux ailes latérales, lesdites deux ailes latérales recouvrant la zone centrale de la poutre et montrant un bord tombé affleurant la première paroi et en ce que ladite étape de fixation comprend les sous-étapes suivantes : (a) soudage à l'arc électrique avec un fil fusible sous flux gazeux par le côté opposé du ou desdits absorbeurs entre ledit bord tombé et le corps creux de la poutre de sorte à former une soudure avec apport de matière et (b) optionnellement, polissage de ladite soudure.

L'invention sera bien comprise et d'autres aspects et avantages apparaîtront clairement à la lecture de la description qui suit donnée en référence aux figures annexées sur lesquelles :
[Fig. 1] La figure 1 est une vue de l'ensemble poutre de pare-chocs et pièce de renfort du côté de la deuxième paroi de la poutre à laquelle les absorbeurs sont montés.
[Fig. 2] La figure 2 montre la pièce de renfort.
[Fig. 3] La figure 3 est une vue d'une partie de l'ensemble poutre de pare-chocs et pièce de renfort du côté de la première paroi de la poutre.
[Fig. 4] La figure 4 montre une section de la partie située au niveau de la zone centrale de la poutre de pare-chocs.

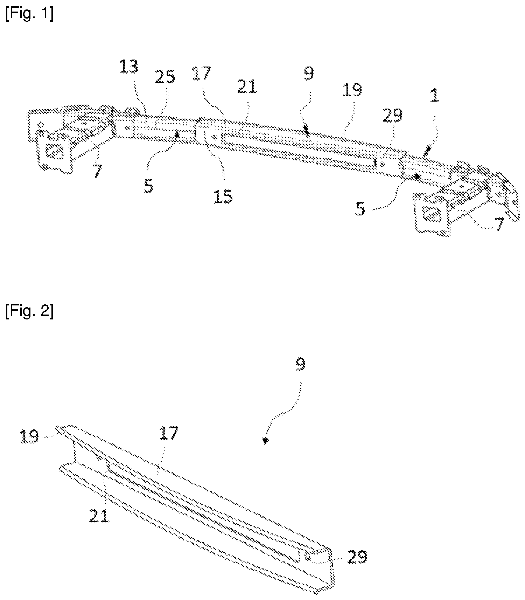

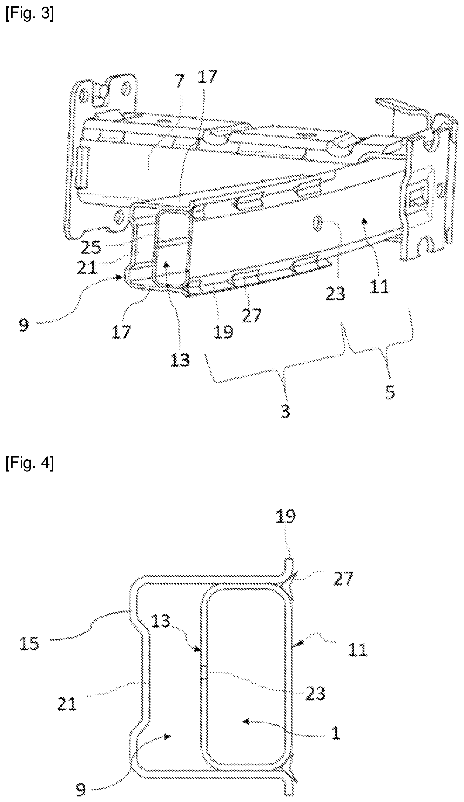

Dans la description qui suit, le terme « comprendre » est synonyme de « inclure » et n'est pas limitatif en ce qu'il autorise la présence d'autres éléments dans la structure de caisse, le véhicule automobile ou d'autres étapes dans le procédé auquel il se rapporte. Il est entendu que le terme « comprendre » inclut les termes « consister en ». Les termes « inférieur » et « supérieur » s'entendront dans leur sens général, le terme « inférieur » désignant une proximité avec le sol plus importante. Sur les différentes figures, les mêmes références désignent des éléments identiques ou similaires. La description qui suit décrit simultanément les figures 1 à 4.

Une structure de caisse de véhicule automobile comprend au moins une poutre 1 de pare-chocs avec une zone centrale 3 et deux zones latérales 5. La zone centrale 3 montre une section centrale et les deux zones latérales 5 montrent chacune une section latérale. Les deux zones latérales 5 sont en outre chacune montée sur au moins un absorbeur 7. Afin d'alléger la masse d'un véhicule tout en se conformant au cahier des charges imposé au constructeur en termes de sécurité, une telle structure de caisse est remarquable en ce qu'au moins une pièce de renfort 9 est rapportée au niveau de la zone centrale 3 du côté du ou desdits absorbeurs 7 et en ce que l'épaisseur de chacune des sections latérales est inférieure à l'épaisseur formée par la section centrale de la poutre 1 de pare-chocs et ladite au moins une pièce de renfort 9.

La ou les pièces de renfort 9 permettent de gérer l'énergie reçu lors d'un choc de type parking ou d'un choc à grande vitesse tandis que l'affinement de la poutre 1 de pare-chocs permet de réduire la masse globale du véhicule.

De manière avantageuse, pour absorber et disperser l'énergie reçue lors d'un choc, l'épaisseur formée par la section centrale et ladite au moins une pièce de renfort 9 est supérieure à l'épaisseur d'au moins une des sections latérales ou préférentiellement de chacune des sections latérales. Par exemple, l'épaisseur formée par l'ensemble composé de la poutre 1 de pare-chocs et de la ou des pièces de renfort 9 est jusqu'à une fois et demie, ou préférablement jusqu'à deux fois l'épaisseur d'au moins une des sections latérales, ou de chacune des sections latérales.

Pour des raisons de fabrication de la poutre 1 de pare-chocs, l'épaisseur de la section centrale est identique à l'épaisseur de chacune des sections latérales. Par rapport à l'épaisseur des poutres de pare-chocs classique, l'épaisseur de la section de la poutre 1 de pare-chocs de l'invention est inférieure, ce qui permet d'affiner la poutre 1 de pare-chocs et donc de diminuer la masse globale du véhicule. En équipant un véhicule classique de l'ensemble composé de la poutre 1 de pare-chocs et de la ou des pièces de renfort 9, il est possible de réduire jusqu'à 500 grammes la masse du véhicule, par exemple entre 300 grammes et 500 grammes.

La poutre 1 de pare-chocs et ladite au moins une pièce de renfort 9 peuvent montrer un profil galbé, présentant ainsi une forme renflée par exemple au niveau du milieu de la zone centrale 3 de la poutre 1.

L'ensemble composé de la poutre 1 de pare-chocs et de la ou des pièces de renfort 9 peut avantageusement être monté à l'avant et/ou l'arrière d'une structure de caisse d'un véhicule automobile. Ledit véhicule automobile peut être un véhicule automobile à motorisation électrique ou à motorisation thermique. Il est relativement avantageux d'utiliser cet ensemble sur un véhicule automobile à motorisation électrique car la diminution globale de la masse d'un véhicule à motorisation électrique favorise les performances de la batterie de propulsion.

Avantageusement, ladite au moins une pièce de renfort 9 présente une longueur comprise entre 60% et 80% de la longueur totale de la poutre 1 de pare-chocs, par exemple une longueur comprise entre 65% et 75%. Dans un mode de réalisation préféré de l'invention, une seule pièce de renfort 9 est rapportée au niveau de la zone centrale 3 du côté du ou desdits absorbeurs 7. Cette pièce de renfort unique est dès lors centrée par rapport à la longueur totale de la poutre 1 de pare-chocs.

Afin de subvenir au besoin de raideur dans le cas d'un choc, la poutre 1 de pare-chocs et/ou ladite au moins une pièce de renfort 9 est en acier montrant une résistance à la traction comprise entre 600 et 1000 MPa telle que déterminée par la norme ISO 6892-1, par exemple comprise entre 650 et 950 MPa ou entre 700 et 900 MPa, ou entre 750 et 850 MPa. Un exemple d'acier habituellement utilisé pour la conception de la poutre 1 de pare-chocs est l'acier HDT780C. De préférence, ladite au moins une pièce de renfort 9 est en acier montrant une résistance à la traction supérieure à la résistance à la traction de l'acier de la poutre 1 de pare-chocs.

Selon l'invention, la poutre 1 de pare-chocs est un corps creux avec une première paroi 11 et une deuxième paroi 13, les absorbeurs 7 étant fixés à la deuxième paroi 13. La première paroi 11 est la paroi qui se trouve face au choc. Ladite au moins une pièce de renfort 9 est un embouti en forme de U montrant un fond 15 et deux ailes latérales 17, et les deux ailes latérales 17 recouvrent la zone centrale 3 de la poutre et montrent un bord tombé 19 affleurant la première paroi 11. Comme la première paroi 11 est la paroi qui va recevoir le choc, il est important de que cette paroi montre une surface homogène, dépourvue de rugosité, afin de pouvoir absorber le choc de manière uniforme. La ou les pièces de renfort 9 sont donc agencées de sorte à ne pas dépasser la première paroi 11.

On comprend que la pièce de renfort 9 recouvre la deuxième paroi 13 de la poutre 1 de pare-chocs au niveau de la zone centrale 3 de celle-ci.

Ladite au moins une pièce de renfort 9 est soudée à la zone centrale 3 de la poutre avec apport de matière entre ledit bord tombé 19 et ledit corps creux de la poutre. Le fait de souder entre le bord tombé 19 et le corps creux de poutre permet de préserver la surface homogène de la première paroi 11 de la poutre 1 de pare-chocs. Il est préférable que la soudure 27 soit polie pour améliorer l'homogénéité de la première paroi 11.

Afin d'améliorer la rigidité de la pièce de renfort, outre le fait de jouer sur le type d'acier comme décrit précédemment, le fond 15 montré par le U de l'embouti peut comprendre au moins un relief 21, par exemple une nervure ou un bossage. Par rapport à l'extérieur de l'embouti, le relief 21 est par exemple une nervure. Une nervure a aussi l'avantage d'alléger l'embouti. Ledit au moins un relief 21 est avantageusement centré sur le fond 15 montré par le U de l'embouti. Il est également possible d'améliorer la rigidité de la poutre 1 de pare-chocs et en même temps de l'alléger en créant au moins un relief 25 sur la deuxième paroi 13 de la poutre 1 de pare-chocs, le relief 25 s'étendant d'une zone latérale à l'autre. Le relief 25 peut par exemple être une nervure ou un bossage, avantageusement une nervure.

Avantageusement la deuxième paroi 13 de la poutre 1 de pare-chocs comprend au moins un premier trou de centrage 23 et/ou le fond 15 montré par le U de l'embouti comprend au moins un deuxième trou de centrage 29 aligné avec ledit au moins un premier trou de centrage 23. Les trous de centrage (23, 29) permettent de positionner correctement ladite au moins une pièce de renfort 9 sur la zone centrale 3 de la poutre 1 de pare-chocs, notamment au moment du soudage. Les trous de centrage (23, 29) permettent l'insertion d'une tige pour supporter temporairement la pièce de renfort avant le soudage. Il est préférable que la deuxième paroi 13 de la poutre montre au moins deux trous de centrage 23, par exemple disposés au niveau des extrémités latérales de la zone centrale 3. De même, il est préférable que le fond 15 montré par le U de l'embouti disposent d'au moins deux trous de centrage 29, par exemple disposés de part et d'autre dudit au moins un relief 21 présent sur le fond 15.

L'invention concerne également un procédé de fabrication d'une structure de caisse d'un véhicule automobile telle que décrite plus haut, dans lequel la structure de caisse comprend au moins une poutre 1 de pare-chocs avec une zone centrale 3 et deux zones latérales 5, la zone centrale 3 montrant une section centrale et les deux zones latérales 5 montrant chacune une section latérale.

Le procédé comprend une étape de montage d'au moins un absorbeur 7 sur chacune des deux zones latérales 5.

Le procédé comprend en outre une étape de fixation d'au moins une pièce de renfort 9 au niveau de la zone centrale 3 du côté du ou desdits absorbeurs 7 de sorte à ce que l'épaisseur de chacune des sections latérales soit inférieure à l'épaisseur formée par la section centrale et ladite au moins une pièce de renfort 9.

La poutre 1 de pare-chocs est un corps creux avec une première paroi 11 et une deuxième paroi 13, les absorbeurs 7 étant montés sur la deuxième paroi 13 et en ladite au moins une pièce de renfort 9 est un embouti en forme de U montrant un fond 15 et deux ailes latérales 17, lesdites deux ailes latérales 17 recouvrant la zone centrale 3 de la poutre et montrant un bord tombé 19 affleurant la première paroi 11. Ladite étape de fixation comprend les sous-étapes suivantes : (a) soudage à l'arc électrique avec un fil fusible sous flux gazeux par le côté opposé du ou desdits absorbeurs 7 entre ledit bord tombé 19 et le corps creux de la poutre 1 de sorte à former une soudure 27 avec apport de matière et (b) optionnellement, polissage de ladite soudure 27 afin de rendre la surface de la première paroi 11 de la poutre 1 de pare-chocs plus homogène et d'éviter toute excroissance au niveau de cette paroi qui pourrait perturber la manière d'absorption et de dispersion de l'énergie reçue lors d'un choc.

Par exemple, la sous-étape (a) peut être une étape de soudage MAG (acronyme de « Metal Active Gas » en anglais). Le flux gazeux nécessaire à la réalisation de la sous-étape (a) peut donc utiliser des gaz réactifs, par exemple un mélange de gaz comprenant notamment du dioxyde de carbone et/ou du monoxyde de carbone pour isoler de l'air ambiant le fil fusible quand celui-ci est mis fusion par l'arc électrique. Aussi, le fil fusible peut être de l'acier, généralement le même que celui utilisé pour fabriquer la poutre 1 de pare-chocs.

## Revendications

1. Structure de caisse de véhicule automobile comprenant au moins une poutre (1) de pare-chocs, la poutre (1) de pare-chocs comprenant une zone centrale (3) et deux zones latérales (5), la zone centrale (3) montrant une section centrale et les deux zones latérales (5) montrant chacune une section latérale, les deux zones latérales (5) étant en outre chacune montée sur au moins un absorbeur (7), au moins une pièce de renfort (9) étant rapportée au niveau de la zone centrale (3) du côté du ou desdits absorbeurs (7) et l'épaisseur de chacune des sections latérales étant inférieure à l'épaisseur formée par la section centrale de la poutre (1) de pare-chocs et ladite au moins une pièce de renfort (9), la poutre (1) de pare-chocs étant un corps creux avec une première paroi (11) et une deuxième paroi (13), la première paroi (11) étant positionnée de manière frontale à l'extrémité libre la poutre (1), les absorbeurs (7) étant fixés à la deuxième paroi (13), **caractérisée en ce qu'**au moins une pièce de renfort (9) est un embouti en forme de U montrant un fond (15) et deux ailes latérales (17), les deux ailes latérales (17) recouvrant la zone centrale (3) de la poutre et montrant un bord tombé (19) affleurant la première paroi (11) ; de préférence, au moins une pièce de renfort (9) est soudée à la zone centrale (3) avec apport de matière entre ledit bord tombé (19) et ledit corps creux de la poutre.

2. Structure selon la revendication 1, **caractérisée en ce que** l'épaisseur de la section centrale de la poutre (1) de pare-chocs est identique à l'épaisseur de chacune de ses sections latérales et/ou **en ce que** l'épaisseur formée par la section centrale de la poutre (1) de pare-chocs et ladite pièce de renfort (9) est jusqu'à deux fois l'épaisseur d'au moins une des sections latérales de la poutre (1) de pare-chocs.

3. Structure selon la revendication 1 ou 2, **caractérisée en ce que** le fond (15) de la pièce de renfort (9) comporte au moins un relief (21) et/ou **en ce que** la deuxième paroi (13) montre au moins un relief (25) s'étendant d'une zone latérale à l'autre.

4. Structure selon la revendication 1 à 3, **caractérisée en ce que** la deuxième paroi (13) de la poutre (1) comprend au moins un premier trou de centrage (23) et/ou **en ce que** le fond (15) de la pèce de renfort (9) comprenant au moins un deuxième trou de centrage (29) aligné avec ledit au moins un premier trou de centrage (23).

5. Structure selon l'une des revendications 1 à 4, **caractérisée en ce que** ladite au moins une pièce de renfort (9) présente une longueur comprise entre 60% et 80% de la longueur totale de la poutre (1) de pare-chocs et/ou **en ce que** ladite au moins une pièce de renfort (9) est une pièce unique centrée par rapport à la longueur totale de la poutre (1) de pare-chocs.

6. Structure selon l'une des revendications 1 à 5, **caractérisée en ce que** la poutre (1) de pare-chocs et/ou ladite au moins une pièce de renfort (9) est en acier montrant une résistance à la traction comprise entre 600 et 1000 MPa telle que déterminée par la norme ISO 6892-1 ; et/ou, ladite au moins une pièce de renfort (9) est en acier montrant une résistance à la traction supérieure à la résistance à la traction de l'acier de la poutre (1) de pare-chocs.

7. Véhicule automobile à motorisation électrique comprenant une structure de caisse, ledit véhicule étant **caractérisé en ce que** la structure de caisse est une structure de caisse telle que définie selon l'une des revendications 1 à 6.

8. Procédé de fabrication d'une structure de caisse d'un véhicule automobile selon l'une des revendications 1 à 6, dans lequel la structure de caisse comprend au moins une poutre (1) de pare-chocs avec une zone centrale (3) et deux zones latérales (5), la zone centrale (3) montrant une section centrale et les deux zones latérales (5) montrant chacune une section latérale, le procédé comprenant une étape de montage d'au moins un absorbeur (7) sur chacune des deux zones latérales (5), le procédé est **caractérisé en ce qu'**il comprend en outre une étape de fixation d'au moins une pièce de renfort (9) au niveau de la zone centrale (3) du côté du ou desdits absorbeurs (7) de sorte à ce que l'épaisseur de chacune des sections latérales soit inférieure à l'épaisseur formée par la section centrale et ladite au moins une pièce de renfort (9).

9. Procédé selon la revendication 8, **caractérisé en ce que** la poutre (1) de pare-chocs est un corps creux avec une première paroi (11) et une deuxième paroi (13), les absorbeurs (7) étant montés sur la deuxième paroi (13) et **en ce que** ladite au moins une pièce de renfort (9) est un embouti en forme de U montrant un fond (15) et deux ailes latérales (17), lesdites deux ailes latérales (17) recouvrant la zone centrale (3) de la poutre et montrant un bord tombé (19) affleurant la première paroi (11) et **en ce que** ladite étape de fixation comprend les sous-étapes suivantes : (a) soudage à l'arc électrique avec un fil fusible sous flux gazeux par le côté opposé du ou desdits absorbeurs (7) entre ledit bord tombé (19) et le corps creux de la poutre (1) de sorte à former une soudure (27) avec apport de matière et (b) optionnellement, polissage de ladite soudure (27).

## Patentansprüche

1. Kraftfahrzeugkarosseriestruktur mit mindestens einem Stoßfängerbalken (1), wobei der Stoßfängerbalken (1) einen zentralen Bereich (3) und zwei seitliche Bereiche (5) aufweist, wobei der zentrale Bereich (3) einen zentralen Abschnitt und die beiden seitlichen Bereiche (5) jeweils einen seitlichen Abschnitt aufweisen, wobei die beiden seitlichen Bereiche (5) ferner jeweils an mindestens einem Absorber (7) angebracht sind, wobei mindestens ein Verstärkungsteil (9) an dem zentralen Bereich (3) auf der Seite des oder der Absorber (7) angebracht ist und die Dicke jedes seitlichen Abschnitts geringer ist als die gebildete Dicke Durch den mittleren Querschnitt des Stoßfängerträgers (1) und des mindestens einen Verstärkungsteils (9) ist der Stoßfängerträger (1) ein Hohlkörper mit einer ersten Wand (11) und einer zweiten Wand (13), wobei die erste Wand (11) stirnseitig am freien Ende des Trägers (1) angeordnet ist, wobei die Absorber (7) an der zweiten Wand (13) befestigt sind, **dadurch gekennzeichnet, dass** mindestens ein Verstärkungsteil (9) ein U-förmiger Prägestempel mit einem Boden (15) und zwei Seitenflügeln ist (17), wobei die beiden Seitenschenkel (17) den Mittelbereich (3) des Balkens abdecken und einen abfallenden Rand (19) aufweisen, der mit der ersten Wand (11) bündig ist; vorzugsweise ist mindestens ein Verstärkungsteil (9) mit dem Mittelbereich (3) unter Materialzufuhr zwischen dem abfallenden Rand (19) und dem Hohlkörper des Balkens verschweißt.

2. Struktur nach Anspruch 1, **dadurch gekennzeichnet, dass** die Dicke des Mittelabschnitts des Stoßfängerträgers (1) gleich der Dicke jedes seiner Seitenabschnitte ist und/oder dass die Dicke, die durch den Mittelabschnitt des Stoßfängerträgers (1) und des Verstärkungsteils (9) gebildet wird, bis zu zweimal so groß ist wie die Dicke mindestens eines der Seitenabschnitte des Stoßfängerträgers (1).

3. Struktur nach Anspruch 1 oder 2, **dadurch gekennzeichnet, dass** der Boden (15) des Verstärkungsteils (9) mindestens eine Erhebung (21) aufweist und/oder dass die zweite Wand (13) mindestens eine Erhebung (25) aufweist, die sich von einem Seitenbereich zum anderen erstreckt.

4. Struktur nach Anspruch 1 bis 3, **dadurch gekennzeichnet, dass** die zweite Wand (13) des Balkens (1) mindestens ein erstes Zentrierloch (23) aufweist und/oder dass der Boden (15) des Verstärkungsteils (9) mindestens ein zweites Zentrierloch (29) aufweist, das mit dem mindestens einen ersten Zentrierloch (23) fluchtet.

5. Struktur nach einem der Ansprüche 1 bis 4, **dadurch gekennzeichnet, dass** das mindestens eine Verstärkungsteil (9) eine Länge zwischen 60% und 80% der Gesamtlänge des Stoßfängerträgers (1) aufweist und/oder dass das mindestens eine Verstärkungsteil (9) ein einziges Teil ist, das in Bezug auf die Gesamtlänge des Stoßfängerträgers (1) zentriert ist.

6. Struktur nach einem der Ansprüche 1 bis 5, **dadurch gekennzeichnet, dass** der Stoßfängerträger (1) und/oder das mindestens eine Verstärkungsteil (9) aus Stahl besteht, der eine Zugfestigkeit zwischen 600 und 1000 MPa aufweist, wie sie durch die Norm ISO 6892-1 bestimmt wird; und/oder das mindestens eine Verstärkungsteil (9) aus Stahl besteht, der eine Zugfestigkeit aufweist, die größer ist als die Zugfestigkeit des Stahls des Stoßfängerträgers (1).

7. Elektrisch angetriebenes Kraftfahrzeug mit einer Aufbaustruktur, wobei das Fahrzeug **dadurch gekennzeichnet ist, dass** die Aufbaustruktur eine Aufbaustruktur ist, wie sie in einem der Ansprüche 1 bis 6 definiert ist.

8. Verfahren zur Herstellung einer Aufbaustruktur eines Kraftfahrzeugs nach einem der Ansprüche 1 bis 6, wobei die Aufbaustruktur mindestens einen Stoßfängerbalken (1) mit einem zentralen Bereich (3) und zwei seitlichen Bereichen (5) umfasst, wobei der zentrale Bereich (3) einen zentralen Abschnitt und die beiden seitlichen Bereiche (5) jeweils einen seitlichen Abschnitt aufweisen, wobei das Verfahren einen Schritt des Anbringens mindestens eines Absorbers (7) an jedem der beiden seitlichen Bereiche (5) umfasst, wobei das Verfahren **dadurch gekennzeichnet ist, dass** es ferner einen Schritt des Anbringens mindestens eines Verstärkungsteils (9) in der Höhe umfasst des mittleren Bereichs (3) auf der Seite des oder der Absorber (7), sodass die Dicke jedes Seitenabschnitts kleiner ist als die Dicke, die durch den mittleren Abschnitt und das mindestens eine Verstärkungsteil (9) gebildet wird.

9. Verfahren nach Anspruch 8, **dadurch gekennzeichnet, dass** der Stoßfängerbalken (1) ein Hohlkörper mit einer ersten Wand (11) und einer zweiten Wand (13) ist, wobei die Absorber (7) an der zweiten Wand (13) angebracht sind, und dass das mindestens eine Verstärkungsteil (9) ein U-förmiges Prägestück ist, das einen Boden (15) und zwei Seitenflügel (17) aufweist, wobei die beiden Seitenflügel (17) den Mittelbereich (3) des Balkens abdecken und einen abfallenden Rand (19) aufweisen Bündig mit der ersten Wand (11) und **dadurch gekennzeichnet, dass** der Befestigungsschritt die folgenden Unterschritte umfasst: (a) Lichtbogenschweißen mit einem Schmelzdraht unter Gasstrom auf der gegenüberliegenden Seite des oder der Absorber (7) zwischen der abfallenden Kante (19) und dem Hohlkörper des Balkens (1), um eine Schweißnaht (27) mit Materialzufuhr zu bilden, und (b) wahlweise Polieren der Schweißnaht (27).

## Claims

1. Motor vehicle body structure comprising at least one bumper beam (1), the bumper beam (1) comprising a centre zone (3) and two side zones (5), the centre zone (3) showing a centre section and the two side zones (5) each showing a side section, the two side zones (5) also each being mounted on at least one absorber (7), at least one reinforcing component (9) being attached to the level of the centre zone (3) of the side of said absorber(s) (7) and the lower thickness of each of the side sections being to the thickness formed by the central section of the bumper beam (1) and said at least one reinforcing component (9), the bumper beam (1) being a hollow body with a first wall (11) and a second wall (13), the first wall (11) being positioned frontally at the free end of the beam (1), the absorbers (7) being fixed to the second wall (13), **characterised in that** at least one reinforcing component (9) is a U-shaped press-formed showing a bottom (15) and two lateral wings (17), the two lateral wings (17) covering the central zone (3) of the beam and showing a flush edge (19) flush with the first wall (11); preferably, at least one reinforcing component (9) is welded to the central zone (3) with an addition of material between said flush edge (19) and said hollow body of the beam.

2. Structure according to claim 1, wherein the thickness of the centre section of the bumper beam (1) is identical to the thickness of each of its side sections and/or in that the thickness formed by the centre section of the bumper beam (1) and said reinforcing component (9) is up to twice the thickness of at least one of the side sections of the bumper beam (1).

3. Structure according to Claim 1 or 2, **characterised in that** the bottom (15) of the reinforcing component (9) comprises at least one relief (21) and/or **in that** the second wall (13) shows at least one relief (25) extending from one lateral zone to the other.

4. Structure according to Claim 1 to 3, **characterised in that** the second wall (13) of the beam (1) comprises at least one first centring hole (23) and/or **in that** the bottom (15) of the reinforcing piece (9) comprises at least one second centring hole (29) aligned with the said at least one first centring hole (23).

5. Structure according to one of Claims 1 to 4, **characterised in that** the said at least one reinforcing component (9) has a length of between 60% and 80% of the total length of the bumper beam (1) and/or **in that** the said at least one reinforcing component (9) is a single component centred by report at the total length of the bumper beam (1).

6. Structure according to one of Claims 1 to 5, **characterised in that** the bumper beam (1) and/or the said at least one reinforcing component (9) is made of steel exhibiting a tensile strength of between 600 and 1000 MPa as determined by the standard ISO 6892-1; and/or the said at least one reinforcing component (9) is made of steel exhibiting a tensile strength greater than the tensile strength of the steel of the bumper beam (1).

7. Motor vehicle with electric motor drive comprising a body structure, the said vehicle being **characterised in that** the body structure is a body structure as defined according to one of Claims 1 to 6.

8. Method for manufacturing a body structure of a motor vehicle according to one of Claims 1 to 6, in which the body structure comprises at least one bumper beam (1) with a centre zone (3) and two lateral zones (5), the centre zone (3) showing a centre section and the two lateral zones (5) each showing a lateral section, the method comprising a step of assembly line of at least one absorber (7) on each of the two lateral zones (5), the method being **characterised in that** it also comprises a step of fixing at least one reinforcing component (9) at the level of the central zone (3) on the side of the absorber or absorbers (7) so that the thickness of each of the lateral sections is less than the thickness formed by the central section and said at least one reinforcing component (9).

9. Process according to Claim 8, **characterised in that** the bumper beam (1) is a hollow body with a first wall (11) and a second wall (13), the absorbers (7) being mounted on the second wall (13) and **in that** the said at least one reinforcing component (9) is a U-shaped stamped portion showing a bottom (15) and two lateral wings (17), the said two lateral wings (17) covering the central zone (3) of the beam and showing a first flush edge (19) flush with the wall (11) and **in that** said fixing step comprises the following sub-steps: (a) electric arc welding with a fusible wire under gaseous flow by the opposite side of said absorber or absorbers (7) between said flanged edge (19) and the hollow body of the beam (1) so as to form a weld (27) with addition of material and (b) optionally, polishing of said weld (27).
